# EUROPÄISCHE PATENTSCHRIFT

(11) **EP 2 912 402 B1**
(45) Veröffentlichungstag und Bekanntmachung des Hinweises auf die Patenterteilung: **14.12.2016**
(21) Anmeldenummer: 13789393.9
(22) Anmeldetag: 03.10.2013
(51) Int. Cl.: F42B 3/107, F42B 3/195

(54) **VERFAHREN ZUR HERSTELLUNG EINES ANZÜNDERSOCKELS FÜR PYROTECHNISCHE SYSTEME**
METHOD FOR PRODUCING AN IGNITER BASE FOR PYROTECHNIC SYSTEMS
PROCÉDÉ DE FABRICATION D'UNE DOUILLE D'ALLUMEUR D'UN SYSTÈME PYROTECHNIQUE

(30) Priorität: 25.10.2012 AT 11592012
(43) Veröffentlichungstag der Anmeldung: 02.09.2015
(73) Patentinhaber: Electrovac Hacht & Huber GmbH, 94121 Salzweg (DE)
(72) Erfinder: BAUER, Christian, AT-3430 Tulln (AT); THUMFART, Dieter, AT-3400 Klosterneuburg (AT)
(74) Vertreter: Gibler & Poth Patentanwälte KG
(86) Internationale Anmeldenummer: PCT/IB2013/002273
(87) Internationale Veröffentlichungsnummer: WO 2014/064497

(56) Entgegenhaltungen:
- EP-A1- 1 813 906
- WO-A1-2012/110242
- DE-A1- 10 348 944
- US-A- 5 157 831

## Beschreibung

Die Erfindung betrifft ein Verfahren zur Herstellung eines Anzündersockels für pyrotechnische Systeme gemäß dem Patentanspruch 1.

In Airbags sind Gasgeneratoren enthalten, welche das zum Aufblasen des Airbags erforderliche Gas erzeugen. Dabei ist in der Regel das Zünden eines Brandsatzes vorgesehen, wozu ein entsprechender Anzünder vorgesehen ist. Derartige Anzünder weisen einen zylindrischen Körper auf, durch welchen elektrisch isoliert ein leitender Kontakt geführt ist. Beim Auslösen des Brandsatzes wird dabei der Anzünder mit dem vollen Druck belastet, welcher durch den Brandsatz verursacht wird, und welcher letztendlich den Gasgenerator antreibt und den Airbag aufbläst.
Dadurch sind derartige Anzünder einer erheblichen mechanischen
Kurzzeitbelastung, ähnlich einem Schlag, ausgesetzt, und es werden besondere Anforderungen an diese gestellt.

Derartige Anzünder weisen einen Anzündersockel auf, welcher in der Regel eine sog. Metall/Glas-Durchführung aufweist, welche - wie sich gezeigt hat - einen die Gesamtbelastbarkeit eines derartigen Anzündersockels limitierenden Teil des gesamten Anzünders darstellt. Bei einer Belastung des Anzünders bis zu dessen Versagen, kommt es zu einem Auspressen des Glasteils aus einem Grundkörper, wodurch die weitere sichere Funktion des gesamten pyrotechnischen Systems gefährdet ist.

Aus der EP 1 813 906 A1 ist einen Anzündersockel für pyrotechnische Systeme sowie ein Verfahren zur Herstellung eines solchen Anzündersockels bekannt. Hierbei ist ein Metallstift in einer Glasdurchführung angeordnet. Hierbei kann diese Glasdurchführung dadurch ausgebildet werden, dass der Metallstift und ein fester Glaspfropfen in die Durchgangsöffnung eingebracht wird, wobei der umgebende Metallkörper durch eine Wärmebehandlung aufgeschrumpft wird. Alternativ kann der Glaskörner in flüssiger Phase von außen in die Durchgangsöffnung eingebracht werden, um dort zu erstarren.

Die WO 2012/110242 A1 beschreibt die Herstellung einer Glasdurchführung für eine Batterie, wobei ein zusätzlicher Grundkörper notwendig ist, mit welcher der Stift über eine Glasdurchführung bei einem Einglasevorgang verschmolzen wird, und dieser Grundkörper anschließend mit dem restlichen Gehäuse verbunden wird.

Aus der DE 103 48 944 A1 ist einen Anzündersockel mit einer Glasdurchführung bekannt.

Die US 5 157 831 A beschreibt ein verfahren zum Herstellen einer Metall-Glas Durchführung.

Aufgabe der Erfindung ist es daher ein Verfahren der eingangs genannten Art anzugeben, mit welchem die genannten Nachteile vermieden werden können, und mit welchem ein Anzünder, insbesondere ein Anzündersockel, hergestellt werden kann, mit welchem die sichere Funktion pyrotechnischer Systeme unterstützt werden kann, welcher eine hohe Gesamtbelastbarkeit aufweist sowie einen geringen Herstellungs- und Materialaufwand.

Erfindungsgemäß wird dies durch die Merkmale des Patentanspruches 1 erreicht.

Dadurch kann ein Anzündersockel hergestellt werden, welcher eine höhere Belastbarkeit aufweist, als herkömmliche Anzündersockel. Dadurch wird die sichere Funktion pyrotechnischer Systeme unterstützt. Dadurch kann weiters ein Anzündersockel hergestellt werden, welcher bei einer gleichen Belastbarkeit wie herkömmliche Anzündersockel einen erheblich geringeren Materialaufwand aufweist. Ein derart hergestellter Anzündersockel weist zudem einen geringeren Energiebedarf zu dessen Herstellung auf. Durch die gegenständlichen Maßnahmen kann dabei die Auspresskraft eines derartigen Glaswerkstoffes und die Pinauszugskraft erhöht werden, bzw. kann ein Anzündersockel geschaffen werden, welcher bei deutlich geringeren Abmessungen dieselben Anforderungen zu erfüllen in der Lage ist, wie bisherige, deutlich größere Anzündersockel Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welcher eine lediglich bevorzugte Ausführungsform beispielhaft dargestellt ist, näher beschrieben. Dabei zeigt die einzeine Figur eine bevorzugte Ausführungsform eines gegenständlichen Anzünders.

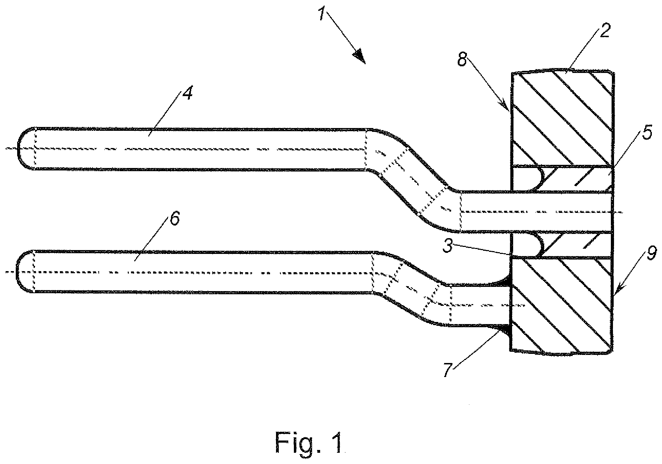

Die einzige Figur zeigt einen Anzündersockel 1 für pyrotechnische Systeme. Derartige Anzündersockel 1 sind Teil von Anzündern, welche insbesondere für sog. Airbags in Kraftfahrzeugen vorgesehen sind und auch als Airbagzünder bezeichnet werden. Darüber hinaus können diese etwa auch Anwendung finden in automatisch aufblasenden Rettungswesten und Rettungsbooten, Notrutschen für Flugzeuge, Gurtstraffern und/oder Batterietrennsystemen. Derartige Anzünder sind vor allem für Anwendungen vorgesehen, bei welchen diese nach dem Zünden eines pyrotechnischen Systems einem durch dieses System aufgebauten Druck eine gewisse Zeit lang standhalten müssen, ohne dabei selbst zerstört zu werden, im Gegensatz zu Zündanordnungen für Minen oder Bomben.

Der Anzündersockel 1 weist einen Stahlgrundkörper 2 auf, welcher nachstehend näher beschrieben wird. In dem Stahlgrundkörper 2 ist eine Durchgangsöffnung 3 angeordnet. In dieser ist ein erster Metallstift 4 angeordnet, welcher an einer ersten Seite 8 des Stahlgrundkörpers 2 deutlich über diesen hinausragt und einen elektrischen Anschlusspin bzw. -stift bildet. Der erste Metallstift 4 ist dabei durch einen ringförmig um diesen herum angeordneten Glaswerkstoff 5 in der Durchgangsöffnung 3 gehalten und durch den Glaswerkstoff 5 auch gegenüber dem Stahlgrundkörper 2 elektrisch isoliert. Der Glaswerkstoff 5 ist dabei mit dem ersten Metallstift 4 und einer Innenfläche der Durchgangsöffnung 3 verschmolzen. Ein Teil des ersten Metallstifts 4 ragt als Zündkontaktstelle an der zweiten Seite 9 des Stahlgrundkörpers 2 aus diesem hervor, oder schließt, wie in der einzigen Figur dargestellt, bündig mit der zweiten Seite 9 des Stahlgrundkörper, welche Seite auch als Stirnseite bzw. Stirnfläche bezeichnet werden kann, ab. An der ersten Seite 8 des Stahlgrundkörpers 2 ist bevorzugt weiters ein zweiter Metallstift 6 leitend befestigt. Bevorzugt ist der zweite Metallstift 6 an die erste Seite bzw. Stirnseite angelötet. Der zweite Metallstift 6 bildet ebenfalls einen elektrischen Anschlusspin bzw. -stift. Bevorzugt sind die Enden des ersten und des zweiten Metallstifts 8, 9 wenigstens bereichsweise mit einem Edelmetall, insbesondere Gold oder Rhodium, beschichtet. Ein derartiger Stahlgrundkörper 2 weist typische Außenabmessungen im einstelligen Millimeterbereich auf.

Zusätzlich zu den in der Figur dargestellten Teilen des Anzündersockels 1 ist an einem vollständigen Anzünder in der Regel ein Zündmittel bzw. ein Explosivstoff direkt an der zweiten Stirnseite 9 angeordnet. Der vollständige Anzünder kann weitere, nicht beschriebene Merkmale und Baugruppen aufweisen.

Nachfolgend wird ein Verfahren zur Herstellung des Anzündersockels1 beschrieben, wobei:
- ein Stahlgrundkörper 2 unter Ausbildung von Gefügeumwandlungen kaltverfestigt wird,
- in dem Stahlgrundkörper 2 eine Durchgangsöffnung 3 eingebracht wird,
- in der Durchgangsöffnung 3 ein erster Metallstift 4 und ein, den ersten Metallstift 4 gegenüber der Durchgangsöffnung 3 isolierender, Glaswerkstoff 5 angeordnet werden,
wobei die derart gebildete Einschmelzanordnung aus Stahtgrundkörper 2, Glaswerkstoff 5 und erstem Metallstift 4 auf eine Glasbenetzungstemperatur erwärmt wird, und wobei eine Einschmetzzeitspanne der Erwärmung der Einschmelzanordnung größer einer Glaseinschmelzzeitdauer und wobei die Einschmelzzeitspanne derart gering ist, dass Verformungsmartensit und/oder Versetzungen in dem Gefüge des Stahlgrundkörpers erhalten bleiben.

Die ersten beiden angeführten Verfahrensschritte können dabei - wie nachstehend anhand bevorzugter Ausführungsvarianten beschrieben wird - in unterschiedlicher Reihenfolge ausgeführt werden.

Erfindungsgemäße Anzündersockel 1 weisen einen Stahlgrundkörper 2, daher einen Körper aus bzw. umfassend Stahl, auf. Dabei sind insbesondere hoch legierte rostfreie bzw. rostträge Stähle mit geringem Kohlenstoffgehalt, insbesondere zwischen 0,01% und 0,7%, sowie weiters 10% bis 20% Chrom und 5% bis 15% Nickel vorgesehen, oder auch unlegierte Qualitätsstähle mit einem Kohlenstoffgehalt kleiner gleich 0,3%, welche Qualitätsstähle - gemäß einer bevorzugten Ausführungsform - nach einem Stanzvorgang zum Zwecke des Korrosionsschutzes vernickelt werden. Darüber hinaus kann der betreffenden Stahl weitere Legierungsbestandteile aufweisen.

Der Stahlgrundkörper 2 weist in der Regel eine zylindrische Grundform auf, kann jedoch auch andere geometrische Formen aufweisen. Insbesondere sind dabei rotationssymmetrische Formen bevorzugt vorgesehen.

Der Stahlgrundkörper 2 wird kaltverfestigt, was - wie nachfolgend beschrieben an unterschiedlichen Schritten des gegenständlichen Verfahrens erfolgen kann. Hiezu wird bevorzugt der betreffenden Stahlgrundkörper 2 plastisch gestaucht, etwa in einer Presse, wodurch es zu Gefügeumwandlungen bzw. Gefügeveränderungen in dem Stahlgrundkörper 2 kommt, welche Gefügeveränderungen zu einer deutlich feststellbaren Festigkeitssteigerung des Stahlgrundkörpers 2 führen. Vor allem kommt es zu sog. Versetzungen sowie weiters zur bereichsweisen Ausbildung von sog. Versetzungsmartensit. Dabei erfolgt während der Umformung des Stahlgrundkörpers 2 bereichsweise eine Umbildung der Gitterstruktur innerhalb des Gefüges von Austenit zu Martensit.

Nachfolgend werden drei bevorzugte Ausführungsformen des Verfahrens bis zum Einbringen des Metallstifts 4 sowie eines Glaswerkstoffs 5 in die Durchgangsöffnung 3 beschrieben.

Gemäß der ersten bevorzugten Ausführungsform besagter Verfahrensschritte ist als Ausgangsmaterial ein Stahlband bzw. ein Flachstahl vorgesehen, wobei vorgesehen sein kann, dass das Stahlband bzw. der Flachstahl zuvor geglüht wurde, um mögliche Verfestigungen teilweise oder im Wesentlichen gänzlich zu beseitigen, welche durch einen Walzvorgang bei dessen Herstellung entstanden sein könnten.

Bei dieser ersten bevorzugten Ausführungsform des Verfahrens ist vorgesehen, dass die Durchgangsöffnung 3 durch Stanzen in dem Stahlband hergestellt wird. Nachfolgend ist vorgesehen, dass aus dem Stahlband, welches bereits die Durchgangsöffnung 3 aufweist, der Stahlgrundkörper 2 ausgestanzt wird. Dabei kann vorgesehen sein, dass das Stahlband bzw. wenigstens der Bereich des Stahlbandes, welcher als Stahlgrundkörper 2 ausgestanzt werden wird, durch definierte Belastungen durch das Stanzwerkzeug oder Teilen der Stanzmaschine kaltverfestigt wird, wobei insbesondere vorgesehen sein kann, dass in jedem Stanzschritt ein geringes weiteres Maß an Kaltverfestigung verursacht wird. Alternativ zu der Kaltverfestigung im Rahmen wenigstens eines Stanzvorgangs kann auch ein separater Verfahrensschritt vorgesehen sein, in welchem der Stahlgrundkörper 2 belastet wird, um eine Kaltverfestigung zu erzielen.

Gemäß der zweiten bevorzugten Ausführungsform besagter Verfahrensschritte ist vorgesehen, dass eine Grundform des Stahlgrundkörpers 2, welche bevorzugt etwa bereits im Wesentlichen die Außenkontur des Anzündersockel 1 aufweist, hergestellt wird, insbesondere durch Ablängen eines Drahtes oder durch Herstellung des entsprechenden Teils als Drehteil. Nachfolgend ist vorgesehen, dass die Durchgangsöffnung 3 durch ein materialabtragendes Verfahren in dem Stahlgrundkörper 2 hergestellt wird. Dabei sind als materialabtragende Verfahren insbesondere spanabhebende Verfahren, wie Bohren, oder elektroerodierende Verfahren, wie Funkenerosion, vorgesehen. Bevorzugt erfolgt nach dem Herstellen der Durchgangsöffnung 3 die Kaltverfestigung wie bereits beschrieben.

Gemäß der dritten bevorzugten Ausführungsform besagter Verfahrensschritte ist vorgesehen, dass eine Grundform des Stahlgrundkörpers 2 analog zum vorstehenden Absatz hergestellt wird, und dass nachfolgend die Durchgangsöffnung 3 durch Lochen in dem Stahlgrundkörper 2 hergestellt wird. Lochen bezeichnet dabei eine Form der Umformung, bei der von beiden Seiten eine Vertiefung in die Stirnseiten des Stahlgrundkörpers 2 bzw. dessen Grundform eingebracht werden, und ein zwischen diesen Vertiefungen bestehender Steg von der einen Vertiefung kommend mit einem Stempel durch die andere Vertiefung hindurchgedrückt wird. Da dabei keine Matrize als Gegenpart zum Stempel vorgesehen ist, handelt es sich nicht um einen Stanzvorgang, bei welchem ein Stempel gegen ein Material drückt, welches auf einer Unterlage, der Matrize aufliegt, welche die Form des auszustanzenden Lochs vorgibt. In Ermangelung einer Matrize handelt es sich folglich auch nicht um einen Stanzvorgang. Bevorzugt erfolgt nach dem Herstellen der Durchgangsöffnung 3 die Kaltverfestigung wie bereits beschrieben.

Es können bei sämtlichen beschriebenen Verfahren auch weitere Verfahrensschritte zur weiteren Formgebung der Außenkonturen des Stahlgrundkörpers 2 vorgesehen sein.

Nachdem, insbesondere nach einem der drei vorstehend beschriebenen bevorzugten Verfahren, ein Stahlgrundkörper 2 mit einer Durchgangsöffnung 3 hergestellt wurde, wird in einem weiteren Verfahrensschritt in der Durchgangsöffnung 3 ein erster Metallstift 4 sowie ein Glaswerkstoff 5 angeordnet. Der Glaswerkstoff 5 soll dabei bei einem fertigen Anzündersockel 1 den ersten Metallstift 4 sowohl halten, als auch gegenüber dem Stahlgrundkörper 2 elektrisch isolieren. Wie bereits eingangs dargelegt, ist die betreffende Glas/Metall-Durchführungen bzw. Glas/Metall-Verbindung besonderen Belastungen ausgesetzt. Bevorzugt ist vorgesehen, dass der Glaswerkstoff 5 in Form eine Glasrings in die Durchgangsöffnung 3 eingebracht wird, und weiters der erste Metallstift 4 in einer inneren Öffnung des Glasrings angeordnet wird. Dieser Glasring ist bevorzugt durch Sintern oder aber durch Ablängen eines gezogenen Halbzeugs gebildet. Es kann aber Alternativ auch vorgesehen sein, dass der erste Metallstift 4 in die Durchgangsöffnung 3 eingebracht und ohne Kontakt zu den Mantelflächen der Durchgangsöffnung 3 gehalten wird, während der rohrförmige Zwischenraum zwischen der Durchgangsöffnung 3 und dem ersten Metallstift 4 mit einem granulierten bzw. pulverförmigen Glaswerkstoff 5 ausgefüllt wird.

Die gemäß dem vorstehenden Absatz gebildete Anordnung aus Stahlgrundkörper 2, Glaswerkstoff 5 und erstem Metallstift 4 wird in weiterer Folge als Einschmelzanordnung bezeichnet. Zur Verbindung des Glaswerkstoffs 5 mit dem ersten Metallstift 4 und dem Stahlgrundkörper 2 ist vorgesehen, die Einschmelzanordnung zu erwärmen. Glas verändert dabei aufgrund dessen amorpher Struktur seine Eigenschaften stegig, wenngleich nicht linear, mit steigender Temperatur, wobei keine exakte Schmelztemperatur angegeben werden kann.

Es ist daher vorgesehen, dass die Einschmelzanordnung in einem Ofen bzw. einer anderen Heizanordnung zumindest auf eine Glasbenetzungstemperatur erwärmt wird. Als Glasbenetzungstemperatur wird eine Temperatur bezeichnet, welche so hoch ist, dass der Glaswerkstoff 5 - in einem im Wesentlichen stationären Temperaturzustand - sowohl an dem ersten Metallstift 4 als auch an dem Stahlgrundkörper 2 wenigstens bereichsweise benetzt. Dies kann einfach mit etablierten Messverfahren nachgewiesen bzw. festgestellt werden.

Die Höhe der Glasbenetzungstemperatur bzw. der Temperaturbereich der Glasbenetzungstemperatur, ist dabei von der verwendeten Glassorte abhängig. Typischerweise beträgt die Glasbenetzungstemperatur mehr als 600°C, insbesondere mehr als 700 °C.

Es kann auch vorgesehen sein, die Einschmelzanordnung so weit zu erwärmen, bis der Glaswerkstoff eine vorgebbare Viskosität, vorzugsweise weniger als 10⁴ Poise, aufweist.

Zum Erreichen einer sicheren und dauerhaften Verbindung des Glaswerkstoffs 5 mit dem ersten Metallstift 4 sowie dem Stahlgrundkörper 2 ist in der Regel eine Erwärmung der Einschmelzanordnung für eine gewisse Mindest-Zeitdauer erforderlich, welche als Glaseinschmelzzeitdauer bezeichnet wird. Diese ist neben der verwendeten Glasart und der damit einhergehenden Glasbenetzungstemperatur auch von der jeweils im Ofen erreichten Maximaltemperatur abhängig. Als Glaseinschmelzzeitdauer ist dabei insbesondere die Zeitdauer bezeichnet, für welche die Einschmelzanordnung oberhalb der Glasbenetzungstemperatur gehalten werden muss um eine Glas/Metall-Verbindung zu bilden. Alternativ und zur einfacheren Vergleichbarkeit kann vorgesehen sein, anstelle der Glasbenetzungstemperatur die Temperatur der P-S-K Linie im Eisen-Kohlenstoff-Diagramm, welche bei den meisten Stählen bei 723°C liegt, anzuwenden.

Typische Werte für die erforderliche Glaseinschmelzzeitdauer liegen im Bereich zwischen 5 und 40 Minuten, insbesondere zwischen 20 und 30 Minuten, sind dabei jeweils vom tatsächlichen Temperaturverlauf des jeweilig verwendeten Ofens sowie vom Glaswerkstoff 5 abhängig, und können durch einfache Testreihen ermittelt werden.

Um eine sichere Glas/Metall-Verbindung sicherzustellen, ist bevorzugt vorgesehen, die Einschmelzanordnung für eine Zeitspanne zu erwärmen, welche größer ist als die Glaseinschmelzzeitdauer, und welche als Einschmelzzeitdauer bezeichnet wird.

Zur Herstellung einer sicheren und haltbaren Glas/Metall-Verbindung ist bei Verwendung typischer technischer Glassorten bevorzugt vorgesehen, die Einschmelzanordnung auf Maximaltemperaturen von mehr als 750°C zu erwärmen. Es ist daher vorgesehen, die Einschmelzanordnung, welche einen Stahlgrundkörper umfasst, auf Temperaturen oberhalb der sog. P-S-K Linie im Eisen-Kohlenstoff-Diagramm zu erwärmen. Bei derartigen Temperaturen kommt es jedoch in dem Stahlgrundkörper 2 zu Gefügeumbildungen, insbesondere einer Rekristallisation, bei welchen es zu einem Abbau von Versetzungen kommt, sowie zur einer Umbildung der Gitterstruktur, und daher auch einem Abbau von Verformungsmartensit. Dabei wird die Zeitspanne, in welcher es zu einem im Wesentlichen vollständigen Abbau der Versetzungen sowie des Verformungsmartensits kommt, als Gefügerückumwandlungszeitdauer bezeichnet. Es hat sich gezeigt, dass bei Erwärmung der Einschmelzanordnung auf eine Temperatur höher der Glasbenetzungstemperatur für eine Einschmelzzeitspanne, welche größer der Glaseinschmelzzeitdauer ist und gleichzeitig kleiner der Gefügerückumwandlungszeitdauer ist, eine erhebliche Steigerung der sog. Glas-Auspresskraft erreicht werden kann. Die Glas-Auspresskraft ist dabei die Kraft die erforderlich ist, um den eingeschmolzenen Glaswerkstoff 5 wieder aus dem Stahlgrundkörper 2 zu entfernen. Durch die gegenständlichen Maßnahmen kann die Glas-Auspresskraft gegenüber herkömmlichen Verfahren überraschender Weise um 20% bis 40% erhöht werden, ohne dass hiezu weitere mechanisch konstruktive Veränderungen an einem der Teile des Anzündersockels 1 erforderlich wären. Durch die gegenständlichen Maßnahmen wird weiters in unerwarteter Weise die Stiftauszugskraft, daher die Kraft die notwendig ist, um den ersten Metallstift 4 aus der Durchgangsöffnung 3 zu entfernen, um 5% bis 30% erhöht werden. Untersuchungen haben ergeben, dass durch die gezielt geringere Erwärmung der Einschmelzanordnung erreicht werden kann, dass die festigkeitssteigernden Gefügebestandteile, wie insbesondere Versetzungen und Verformungsmartensit, nicht vollständig abgebaut werden, sondern zu einem Teil erhalten bleiben, wodurch der Stahlgrundkörper 2 eines erfindungsgemäßen Anzünders eine hohe Festigkeit und insbesondere eine hohe Formstabilität aufweist, was sich wiederum positiv auf die Glas/Metall-Verbindung auswirkt.

Erfindungsgemäß ist die Einschmelzzeitspanne derart gering, dass Verformungsmartensit und/oder Versetzungen in dem Gefüge des Stahlgrundkörpers 2 erhalten bleiben. Dabei ist vorgesehen, dass Versetzungen und/oder Verformungsmartensit in einer Probe des Stahlgrundkörpers eines Anzünders mit bereits gebildeter Glas/Metall-Verbindung mit herkömmlichen metallurgischen Verfahren feststellbar sind. Insbesondere ist vorgesehen, dass zumindest bei einer Vergrößerung eines Schliffbildes von 1000:1 Verformungsmartensit und/oder Versetzungen in mehr als einem Korn, insbesondere in wenigstens 20% der Körner und/oder 20% der Fläche des Schliffbilds, des Gefüges feststellbar sind.

Es hat sich gezeigt, dass die Festigkeit eine direkte Korrelation zur messbaren Härte, vor allem der Vickershärte, hat, sodass mittels Härtemessung direkt auf die Festigkeit des Stahlgrundkörpers 2 geschlossen werden kann. Dies ist vorteilhaft, da eine Zugfestigkeitsmessung direkt an einem derart kleinen Bauteil nicht möglich sein dürfte. Die hohe Belastbarkeit bzw. Festigkeit des Stahlgrundkörpers 2 wirkt sich dabei positiv auf die bereits angesprochene Auspresskraft des Glaswerkstoffes 5 in der Durchgangsöffnung 3 aus.

Bevorzugt ist daher vorgesehen, dass die Einschmelzzeitspanne und/oder die Temperaturen derart gering sind, dass der Stahlgrundkörper nach dem Schmelzvorgang eine Vickershärte von mindestens 140 HV, insbesondere mindestens 150 HV, vor allem mindestens 160 HV, aufweist.

Besonders bevorzugt ist dabei vorgesehen, dass die Einschmelzanordnung für eine Zeitspanne von weniger als 30 Minuten auf Temperaturen von über 723 ° C gehalten wird.

Weiters ist bevorzugt vorgesehen, dass die Einschmelzanordnung auf eine Temperatur von maximal 940°C, insbesondere maximal 880°C, erwärmt wird. Die Maximaltemperaturen denen die Einschmelzanordnung dabei ausgesetzt sind, sind jedenfalls deutlich unterhalb der typischen Schmelztemperatur von Stahl, welche bei den meisten Stählen bei 1536°C liegt.

Bei den beiden vorstehend beschriebenen Maßnahmen handelt es ich um praktische Werte zum Erzielen der beschriebenen Vorteile. Durch entsprechende Versuche können die betreffenden Werte einfach weiter optimiert werden.

Entsprechende Anzündersockel 1 weisen in der Regel einen zweiten Metallstift 6 auf, welcher an dem Stahlgrundkörper 2, insbesondere der ersten Seite 8, elektrisch leitend befestigt, insbesondere angelötet, ist. Dabei kann vorgesehen sein, dass dieser zweite Metallstift 6, welcher in der Regel als Massekontakt dient, sowohl stumpf an dem Stahlgrundkörper 2 angelötet ist, es kann aber auch vorgesehen sein, dass der zweite Metallstift 6 in einer entsprechenden Ausnehmung bzw. einer weiteren Durchbrechung des Stahlgrundkörpers 2 angeordnet ist. Dabei kann vorgesehen sein, den zweiten Metallstift 6 in einem separaten Arbeitsschritt an dem Stahlkörper 2 zu befestigen, wobei jedoch bevorzugt vorgesehen ist, den zweiten Metallstift 6 in einem Lötvorgang zusammen mit dem Einschmelzvorgang an dem Stahlgrundkörper 2 zu befestigen.

Es ist daher in Weiterbildung bevorzugt vorgesehen, dass - vor dem Erwärmen der Einschmelzanordnung - an einem Bereich des Stahlgrundkörpers 2 ein zweiter Metallstift 6 zusammen mit einem Lot 7 angeordnet wird, und dass gleichzeitig mit dem Einschmelzen des ersten Metallstiftes 4 der zweite Metallstift 6 an dem Stahlgrundkörper 2 angelötet wird. Dadurch kann auf eine zusätzliche bzw. separate Erwärmung des Stahlgrundkörpers 2 bzw. eines Teiles desselben verzichtet werden. Dadurch kann eine lediglich partielle Gefügeveränderung in dem Stahlgrundkörper 2 verhindert werden, welche durch ein nachträglich punktuelles Anlöten verursacht werden würde, und zu einer Schwächung des Stahlgrundkörpers führen würde.

Hinsichtlich des verwendeten Lots ist zu beachten, dass dieses eine entsprechend tiefe Schmelztemperatur aufweist, um die Bildung einer benetzen und warmen Lötstelle bei den vorstehend beschriebenen Maximaltemperaturen zu erreichen. Entsprechende Lote, wie beispielsweise Ag72Cu28, sind bekannt.

Die gegenständliche Erfindung betrifft dabei weiters einen Anzündersockel 1 für pyrotechnische Systeme, wobei der Anzündersockel 1 einen Stahlgrundkörper 2 mit einer Durchgangsöffnung 3 aufweist, wobei in der Durchgangsöffnung 3 ein erster Metallstift 4 und ein, den ersten Metallstift 4 gegenüber der Durchgangsöffnung 3 isolierender, Glaswerkstoff 5 angeordnet sind, wobei der Stahlgrundkörper 2 verformungsbedingte Gefügeumwandlungen aufweist.

Wie vorstehend bereits ausgeführt, ist erfindungsgemäß vorgesehen, dass die verformungsbedingten Gefügeumwandlungen Verformungsmartensit und/oder Versetzungen umfassen, wodurch die dargelegten Vorteile erzielt werden können.

## Patentansprüche

1. Verfahren zur Herstellung eines Anzündersockels (1) für pyrotechnische Systeme, wobei
• ein Stahlgrundkörper (2) unter Ausbildung von Gefügeumwandlungen kaltverfestigt wird,
• in dem Stahlgrundkörper (2) eine Durchgangsöffnung (3) eingebracht wird,
• in der Durchgangsöffnung (3) ein erster Metallstift (4) und ein, den ersten Metallstift (4) gegenüber der Durchgangsöffnung (3) isolierender, Glaswerkstoff (5) angeordnet werden,
wobei die derart gebildete Einschmelzanordnung aus Stahlgrundkörper (2), Glaswerkstoff (5) und erstem Metallstift (4) auf eine Glasbenetzungstemperatur erwärmt wird, wobei eine Einschmetzzeitspanne der Erwärmung der Einschmelzanordnung größer einer Glaseinschmelzzeitdauer ist,
**dadurch gekennzeichnet,**
**dass** die Einschmelzzeitspanne derart gering ist, dass Verformungsmartensit und/oder Versetzungen in dem Gefüge des Stahlgrundkörpers (2) erhalten bleiben,

2. Verfahren nach Anspruch 1, **dadurch gekennzeichnet, dass** der Glaswerkstoff (5) als Glasring ausgebildet ist.

3. Verfahren nach Anspruch 1 oder 2, **dadurch gekennzeichnet, dass** die Einschmelzanordnung für eine Zeitspanne von weniger als 30 Minuten auf Temperaturen von über 700°C gehalten wird.

4. Verfahren nach einem der Ansprüche 1 bis 3, **dadurch gekennzeichnet, dass** die Einschmelzanordnung auf eine Temperatur von maximal 940° C, insbesondere maximal 880°C, erwärmt wird.

5. Verfahren nach einem der Ansprüche 1 bis 4, **dadurch gekennzeichnet, dass** vor dem Erwärmen der Einschmelzanordnung - an einem Bereich des Stahlgrundkörpers (2) ein zweiter Metallstift (6) zusammen mit einem Lot (7) angeordnet wird, und dass gleichzeitig mit dem Einschmelzen des ersten Metallstiftes (4) der zweite Metallstift (6) an dem Stahlgrundkörper (2) angelötet wird.

6. Verfahren nach einem der Ansprüche 1 bis 5, **dadurch gekennzeichnet, dass** die Durchgangsöffnung (3) durch Stanzen in einem Stahlband hergestellt wird.

7. Verfahren nach Anspruch 6, **dadurch gekennzeichnet, dass** aus dem Stahlband der Stahlgrundkörper (2) ausgestanzt wird.

8. Verfahren nach einem der Ansprüche 1 bis 5, **dadurch gekennzeichnet, dass** die Durchgangsöffnung (3) durch ein materialabtragendes, insbesondere spanabhebendes oder elektroerodierendes, Verfahren in dem, insbesondere als Stahldrehteil ausgebildeten, Stahlgrundkörper (2) hergestellt wird.

9. Verfahren nach einem der Ansprüche 1 bis 5, **dadurch gekennzeichnet, dass** die Durchgangsöffnung (3) durch Lochen in dem Stahlgrundkörper (2) hergestellt wird.

10. Verfahren nach einem der Ansprüche 1 bis 7, **dadurch gekennzeichnet, dass** der Stahlgrundkörper gestaucht wird, zum Erzielen der Kaltverfestigung.

## Claims

1. A method for producing an igniter base (1) for pyrotechnic systems, wherein
- a steel main body (2) is strain-hardened by forming structural transformations,
- a passage opening (3) is introduced into the steel main body (2),
- a first metal pin and a glass material (5) that insulates the first metal pin (4) from the passage opening (3) are arranged in the passage opening (3),
wherein the fusible assembly thus formed from the steel main body (2), the glass material (5) and the first metal pin (4) is heated to a glass wetting temperature, wherein a fusing time period for the heating of the fusible assembly is greater than a glass fusing duration, **characterized in that** the fusing time period is so low that deformation martensite and/or dislocations in the structure of the steel main body (2) are maintained.

2. A method according to claim 1, **characterized in that** the glass material (5) is formed as a glass ring.

3. A method according to claim 1 or 2, **characterized in that** the fusible arrangement is held at temperatures of over 700°C for a time period of less than 30 minutes.

4. A method according to one of the claims 1 to 3, **characterized in that** the fusible arrangement is heated to a temperature of a maximum of 940°C, especially a maximum of 880°C.

5. A method according to one of the claims 1 to 4, **characterized in that** prior to the heating of the fusible arrangement a second metal pin (6) is arranged together with a solder (7) on a region of the steel main body (2), and that simultaneously with the melting of the first metal pin (4) the second metal pin (6) is soldered onto the steel main body (2).

6. A method according to one of the claims 1 to 5, **characterized in that** the passage opening (3) is formed by punching in a steel belt.

7. A method according to claim 6, **characterized in that** the steel main body (2) is punched out of the steel belt.

8. A method according to one of the claims 1 to 5, **characterized in that** the passage opening (3) is produced in the steel main body (2), which is especially formed as a steel turned component, by a material-removing method, especially a metal-cutting or electro-erosive method.

9. A method according to one of the claims 1 to 5, **characterized in that** the passage opening (3) is produced by punching in the steel main body (2).

10. A method according to one of the claims 1 to 7, **characterized in that** the steel main body is upset, for achieving the strain-hardening.

## Revendications

1. Procédé pour la fabrication d'une douille de déclencheur (1) pour des systèmes pyrotechniques, dans lequel
- un corps de base en acier (2) est durci à froid en provoquant des modifications de la structure,
- une ouverture de passage (3) est ménagée dans le corps de base en acier (2),
- une première goupille métallique (4) et un matériau en verre (5) isolant la première goupille métallique (4) de l'ouverture de passage (3) sont disposés dans l'ouverture de passage (3),
le dispositif fusible ainsi formé avec le corps de base en acier (2), le matériau en verre (5) et la première goupille métallique (4) est chauffé jusqu'à une température de mouillage du verre, un intervalle de temps de fusion dans l'échauffement du dispositif fusible étant plus long que la durée de fusion du verre,
**caractérisé en ce que** l'intervalle de temps de fusion est suffisamment bref pour que de la martensite de déformation et/ou des dislocations dans la structure du corps de base en acier (2) persistent.

2. Procédé selon la revendication 1, **caractérisé en ce que** le matériau en verre (5) est conformé comme un anneau en verre.

3. Procédé selon la revendication 1 ou 2, **caractérisé en ce que** le dispositif fusible est maintenu à des températures supérieures à 700 °C pendant un intervalle de temps de moins de 30 minutes.

4. Procédé selon l'une des revendications 1 à 3, **caractérisé en ce que** le dispositif fusible est chauffé à une température de 940 °C au maximum, en particulier de 880 °C au maximum.

5. Procédé selon l'une des revendications 1 à 4, **caractérisé en ce qu'**avant le chauffage du dispositif fusible, une deuxième goupille métallique (6) est disposée dans une zone du corps de base en acier (2) avec une brasure (7) et **en ce qu'**en même temps que la première goupille métallique (4) est fusionnée, la deuxième goupille métallique (6) est brasée sur le corps de base en acier (2).

6. Procédé selon l'une des revendications 1 à 5, **caractérisé en ce que** l'ouverture de passage (3) est obtenue par découpe à l'emporte-pièce dans un feuillard en acier.

7. Procédé selon la revendication 6, **caractérisé en ce que** le corps de base en acier (2) est découpé à l'emporte-pièce dans le feuillard en acier.

8. Procédé selon l'une des revendications 1 à 5, **caractérisé en ce que** l'ouverture de passage (3) est réalisée par un procédé d'enlèvement de matière, en particulier un procédé d'enlèvement de copeaux ou d'électroérosion, dans le corps de base en acier (2), conformé en particulier comme une pièce tournée en acier.

9. Procédé selon l'une des revendications 1 à 5, **caractérisé en ce que** l'ouverture de passage (3) est réalisée par perçage du corps de base en acier (2).

10. Procédé selon l'une des revendications 1 à 7, **caractérisé en ce que** le corps de base en acier est écroui afin de le durcir à froid.
